(19) Europäisches Patentamt
European Patent Office
Office européen des brevets

(11) Veröffentlichungsnummer : **0 068 442**
**B1**

(12) # EUROPÄISCHE PATENTSCHRIFT

(45) Veröffentlichungstag der Patentschrift : **05.03.86**

(51) Int. Cl.⁴ : **A 01 N 31/08**

(21) Anmeldenummer : **82105548.0**

(22) Anmeldetag : **24.06.82**

(54) **Mittel, dessen Verwendung und Verfahren zur Bekämpfung phytopathogener Pilze und Bakterien.**

(30) Priorität : **25.06.81 DD 231148**
**20.11.81 DD 235019**
**17.03.82 DD 238226**

(43) Veröffentlichungstag der Anmeldung : **05.01.83 Patentblatt 83/01**

(45) Bekanntmachung des Hinweises auf die Patenterteilung : **05.03.86 Patentblatt 86/10**

(84) Benannte Vertragsstaaten : **AT BE CH DE FR GB IT LI NL SE**

(56) Entgegenhaltungen :
**DD-A- 110 423**
**DD-A- 191 842**
**FR-A- 1 298 927**
**GB-A- 916 506**
**US-A- 2 872 489**
**US-A- 3 839 586**
**US-A- 4 029 818**

(73) Patentinhaber : **VEB Berlin-Chemie**
**Glienicker Weg 125-127**
**DDR-1199 Berlin (DD)**

(72) Erfinder : **Adam, Lothar, Dr.**
**Im Hagen 30**
**DDR-1532 Kleinmachnow (DD)**
Erfinder : **Albrecht, Ursula**
**Eichenweg 16-18**
**DDR-1513 Wilhelmshorst (DD)**
Erfinder : **Burth, Ulrich, Dr.**
**Im Kamp 32**
**DDR-1532 Kleinmachnow (DD)**
Erfinder : **Kramer, Axel, Dr.**
**Martin-Luther-Strasse 25**
**DDR-2200 Greifswald (DD)**
Erfinder : **Lück, Sieghard, Dr.**
**Bodestrasse 12**
**DDR-1530 Teltow (DD)**
Erfinder : **Müller, Rainer, Dr.**
**Lupinenschlag 11**
**DDR-1532 Kleinmachnow (DD)**
Erfinder : **Neeb, Lothar**
**Falkenberger Strasse 25**
**DDR-1120 Berlin (DD)**
Erfinder : **Rattba, Hubert, Dr.**
**Elbestrasse 15d**
**DDR-1530 Teltow (DD)**
Erfinder : **Weufen, Wolfgang, Dr. Dr. Prof.**
**Kirschenweg 9**
**DDR-2200 Greifswald (DD)**

(74) Vertreter : **Hansen, Bernd, Dr.rer.nat. et al**
**Hoffmann, Eitle & Partner Patentanwälte Arabellastrasse 4**
**D-8000 München 81 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Mittel, deren Verwendung und Verfahren zur Bekämpfung phytopathogener Pilze und Bakterien. Die erfindungsgemässen Mittel enthalten antimikrobiell wirksame Verbindungen der allgemeinen Formel I

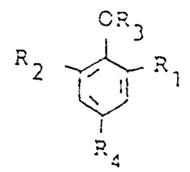

(I)

worin $R_4$ die Gruppierung

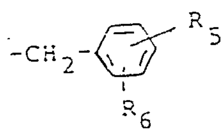

darstellt, und $R_1$, $R_2$, $R_5$ und $R_6$ Chlor, Brom oder Alkylgruppen mit bis zu 5 C-Atomen, sowie $R_5$ und $R_6$ zusätzlich auch Wasserstoff, $R_3$ Wasserstoff, Natrium, Kalium, Magnesium, Calcium, Barium, Zinn, Zink, Kupfer, Ammonium oder substituiertes Ammonium bedeuten und ausserdem können $R_1$, $R_2$ und $R_4$ austauschbar sowohl in ortho- als auch in para-Stellung angeordnet sein und Fungizide, die zur chemischen Bekämpfung von phytopathogenen Pilzen und Bakterien verwendet werden können. Diese Mittel werden gegen Mykosen und Bakteriosen im Getreide-, Obst-, Kartoffel-, Gemüse und Zierpflanzenbau sowie als Beiz- und Vorratsschutzmittel für landwirtschaftliches oder gärtnerisches Erntegut, vorzugsweise gegen den Erreger der bakteriellen Knollennassfäule (Erwinia spp.), der Knollentrockenfäule (Fusarium spp. und Phoma spp.) und der Rhizoctonia (Rhizoctonia solani Kühn) an Kartoffelknollen sowie Rindenkrankheiten im Obstbau eingesetzt.

Mykosen und Bakteriosen der Kulturplanzen verursachen jährlich Ernteverluste und Verluste an gelagertem Erntegut, die auf mehr als 20 Milliarden Dollar geschätzt werden. Neben züchterischen Massnahmen kommt dem Einsatzt von Pflanzenschutzmitteln eine entscheidende Bedeutung zur Ausschöpfung der hohen Ertragspotenz unserer Kulturpflanzen und zum Schutz des gelagerten Erntegutes zu. Für viele Pflanzenkrankheiten sind noch keine hinreichend wirksamen oder ausreichend praktikablen Lösungen bekannt (Mischfäulen an Lagergut, Rindenkrankheiten im Obstbau u. a.). Das betrifft besonders Pflanzenschutzmittel gegen Bakteriosen mit Ausnhame der Kartoffelbeizung. Ein weltweites Problem stellen die Verluste durch Fäulnis von Erntegut in der Lagerperiode, insbesondere bei der Kartoffel dar. Aus der Fachliteratur sind chemische Bekämpfungsmöglichkeiten, die gegen pilzliche und bakterielle Schaderreger an den Kartoffelknollen gerichtet sind, bekannt. Unter den zahlreichen zum Einsatz gekommenen Wirkstoffen waren gegenüber der Knollentrockenfäule (Fusarium spp. und Phoma ssp.) die Benzimidazole (Thiabendazol, Fuberidazol, Benomyl, Carbendazim u. a) am wirksamsten (DD-WP-130 427 ; DD-WP-110 423 ; DE-AS-1 209 799 und 1 237 731 ; DE-OS-1 745 784 ; US-PS-3 631 175 und 3 657 443 ; DD-WP-107 204).

Gegenüber Knollentrockenfäulen kamen ebenfalls Dithiocarbamate zum Einsatz. Zur Bekämpfung der Rhizoctonia wurden vor allem Pentrachlornitrobenzol, Maneb und Mancozeb verwendet. Zur erfolgreichen Bekämpfung der bakteriellen Knollennassfäule (Erwinia spp.) unter praktischen Bedingungen kann bisher nur das Antibiotikum Chloramphenicol aufgeführt werden (DD-WP-78 423). Zur komplexen Erfassung aller Schaderreger erwies es sich als vorteilhaft, ein Gemisch, bestehend aus einem Benzimidazolfungizid und Chloramphenicol einzusetzen (DD-WP-110 423 und 130 427).

Dieses Gemisch bildet die Grundlage für ein Verfahren zur vorzugsweisen Behandlung von Kartoffelpflanzgut, das für die nachfolgende Lagerung bestimmt ist.

Der Einsatz von Chloramphenicol, das das erste Breitbandantibiotikum überhaupt war und auch das erste synthetisch herstellbare Antibiotikum darstellt, ist als Beizmittel an Lagergut als risikoreich anzusehen.

Von der WHO (World Health Organization) gibt es die Empfehlung, keine in der Humanmedizin verwendeten Antibiotika paramedizinisch einzusetzen. Aus diesem Grunde wird Chloramphenicol international nicht für Pflanzenschutzzwecke eingesetzt.

Als sehr ernst ist die Tatsache zu wertenm, dass durch fortlaufende Anwendung von Chloramphenicol als Pflanzenschutzmittel in der Landwirtschaft ein Verschleppen in die Umwelt erfolgt und mit der Herabsetzung der Sensibilität von Bakterien zu rechnen ist (Rosenthdal, u. a. 1977). Eine berabgesetzte Sensibilität ist häufig an Resistenzfaktoren (R-Plasmide) gebunden, die durch Konjugation oder Transduktion bei Bakterien zwischen Arten, Gattungen, Familien oder sogar Ordnungen übertragen

werden kkönnen und somit verheerende Folgen für die Therapie entstehen können (WHO, 1973 ; Rische, 1975).

Antimikrobiell wirksame Verbindungen der allgemeinen Formel I stellen Wirkstoffe vom Verbindungstyp bekannter antimikrobiell wirksamer Phenole dar, bei deren Synthese von einem Abfallprodukt der herbizidsynthese (4-Chlor-2-methylphenol-Synthese) ausgegangen werden kann. Diese in der DD-WP-131 746 beschriebenen phenolischen Wirkstoffe zeichnen sich durch gute antimikrobielle Eigenschaften aus, die zu entsprechenden Anwendungsempfehlungen in der Human- und Veterinärmedizin führten. Aus der DD-A-191 842 ist auch die Verwendung der dortigen phenolischen Wirkstoffe in Kombination mit antimykotischen Salben oder Seifen bekannt.

Es ist weiterhin bekannt, dass Phenolderivate, wie Chlorphenol, Pentachlorphenol, Kresol, Chlorkresol, Benzylphenol, Benzylchlorphenol und Thymol antimikrobiell wirksam sind und deshalb zur Wirkungssteigerung und Ausweitung des Wirkungsspektrums als potentielle Kombinationspartner für Fungizide in Frage kommen. Nachteile dieser Verbindungen sind die teilweise sehr hohe Phytotoxizität und Warmblütlertoxizität, die ihren Einsatz im Pflanzenschutz ausschliesst.

GB-A-916 506 beschreibt die bakterizide Wirkung von Verbindungen der allgemeinen Formel I, gibt aber keinen Hinweis für die Verwendung dieser Verbindungen in Kombination mit Fungiziden im Pflanzenschutz.

Ziel der Erfindung ist es, Mittel zur Bekämpfung phytopathogener Pilze und Bakterien, vorzugsweise gegen Knollenfäulen gelagerter Kartoffeln, zu entwickeln, die bei minimaler Phytotoxizität eine maximale fungizide und bakterizide Wirkung erlauben, und die oben genannten Mängel speziell bei der Behandlung von gelagerten Kartoffeln nicht besitzen, sowie die Möglichkeit eröffnen, auch gegen bislang nicht hinreichend bekämpfbare Pflanzenkrankheiten eine Wirkung zu erzielen (z. B. Mischfäulen an Lagergut, Rindenkrankheiten im Obstbau u. a.).

Der Erfindung liegt die Aufgabe zugrunde, Mittel zur Bekämpfung phytopathogener Pilze und Bakterien zu entwickeln, die vorzugsweise zur Behandlung von Kartoffelknollen, die zur Lagerung vorgesehen sind, geeignet sind und die Möglichkeit eröffnen, auch gegen bislang nicht hinreichend bekämpfbare Pflanzenkrankheiten eine Wirkung zu erzielen. Es ist dabei das im Einsatz risikoreiche Antibiotikum Chloramphenicol durch eine günstigere Verbindung zu ersetzen und es soll trotzdem eine Minderung der Gesamtfäulnisverluste bei Kartoffeln während der Lagerung um 60 bis 90 %, eine Erhöhung der Ertrages bei Pflanzkartoffeln um 5 bis 10 % und eine Verbesserung der Pflanzgutqualität erreicht werden, sowie das Auftreten von schwarzbeinigen und Rhizoctonia-geschädigten Pflanzen im Bestand um mindestens 50 % gesenkt werden.

Die Erfindung betrifft Mittel zur Bekämpfung phytopathogener Pilze und Bakterien, wobei das Mittel dadurch gekennzeichnet ist, daß es ein synergistisch wirkendes Gemisch ist aus antimikrobiell wirksamen Derivaten eines Phenols der allgemeinen Formel I

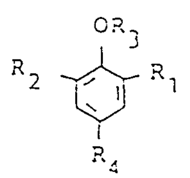

ist, worin $R_4$ die Gruppierung

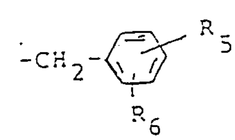

darstellt, und $R_1$, $R_2$, $R_5$ und $R_6$ Chlor, Brom oder Alkylgruppen mit bis zu 5 C-Atomen, wobei $R_5$ und $R_6$ zusätzlich auch Wasserstoff, $R_3$ Wasserstoff, Natrium, Kalium, Magnesium, Calcium, Barium, Zinn, Zink, Kupfer, Ammonium oder substituiertes Ammonium sowie Wismut bedeuten, und $R_1$, $R_2$ und $R_4$ austauschbar sowohl in ortho- als auch in para-Stellung angeordnet sein können, und Fungiziden aus der Gruppe

Schwefel,
Kupferosidchlorid,
Pentachlornitrobenzol,
Dithiocarbamate, (Zineb, Maneb, Mancozeb),
Fentinacetat,
Captan,
Captafol,
Propamocarb,
Oxathiine, (Carboxin, Oxycarboxin),

Benzimidazole (Benomyl, Carbendazin, Thiophanat-Methyl, Thiabendazol, Fuberidazol),
Pyrimidine (Ethirimol, Dimethirimol, Nuarimol, Fenamirol),
Morpholine (Tridemorph, Dodemorph, Aldimorph, Fenpropemorph),
Triforine,
Pyrazophos,
Triadifon,
Triademenol,
Chloraniformethan,
Dichlobentrazol und
Metalaxyl.
Verbindungen der Formel I sind vorzugsweise
6-Brom-2-methyl-4-benzylphenol,
6-Chlor-2-methyl-4-benzylphenol,
6-Brom-2-ethyl-4-benzylphenol,
2-Chlor-6-methyl-4-benzylphenol,
2-Chlor-6-methyl-4-(4'-isopropylbenzyl)-phenol,
2-Chlor-6-ethyl-4-(4'-ethylbenzyl)-phenol,
2-Chlor-6-methyl-4-(4'-ethylbenzyl)-phenol
6-Brom-2-ethyl-4-(4'-isopropylbenzyl)-phenol
6-Brom-2-methyl-4-(4'-isopropylbenzyl)-phenol
2-Chlor-6-methyl-4-(4'-chlorbenzyl)-phenol,
2-Brom-6-methyl-4-(4'-bromenzyl)-phenol,
2-Chlor-6-methyl-4-(4'-methylbenzyl)-phenol,
2-Chlor-6-ethyl-4-(4'-chlorbenzyl)-phenol,
4-Chlor-2-ethyl-6-benzylphenol,
4-Chlor-2-ethyl-6-(4'-isopropylbenzyl)-phenol,
4-Chlor-2-ethyl-6-(4'-tert.-butylbenzyl)-phenol,
4-Chlor-2-methyl-6-(4'-isopropylbenzyl)-phenol,
2-Chlor-6-methyl-4-(4'-tert.-butylbenzyl)-phenol,
4-Brom-2-ethyl-6-benzylphenol, sowie
2-Brom-6-ethyl-4-(4'-brombenzyl)-phenol
zur Anwendung, wobei bevorzugt Natrium-, Kalium-, Barium- und Calciumsalze Verwendung finden.

Der synergistische Effekt dieser Gemische kann dann erreicht werden, wenn für die Formulierungen Mischungsverhältnisse von Verbindungen der allgemeinen Formel I : Fungizid von 100 : 1 bis 1 : 100 verwendet werden ; ein optimaler Effekt wird bei der Behandlung von zu lagernden Kartoffelknollen mit einem Mischungsverhältnis von Verbindungen der allgemeinen Formel I : Fungizid von 1 : 50 bis 1 : 5 erreicht.

Vorzugsweise kommen zur Behandlung von Kartoffelknollen gegen Fäulniserreger, gegen Rindenkrankheiten im Obstbau usw. Benzimidazolfungizide zur Anwendung. Die erfingungsgemässen Gemische werden mit den üblichen Träger- und Zusatzstoffen in eine für die Anwendung geeignete Form gebracht. Den erfindungsgemässen Mitteln können weiterhin Zusätze von Insektiziden, Bakteriziden, Viriziden, Sikkanten, Mineralstoffen, Spurenelementen sowie Mittel zur Steuerung biologischer Prozesse beigemischt werden, durch die ihr Verwendungszweck zur Pflanzenhygiene und Pflanzenpflege erweitert wird. Die Applikation der vorzugsweise wässrigen Spritzbrühen auf den pflanzlichen Spross oder zur Behandlung von landwirtschaftlichem Erntegut kann mit einer Vielzahl von Techniken erfolgen.

Es wurde festgestellt, dass verschiedene Formulierungstypen (Spritzpulver, Stäube, Lösungen, Suspensionen, Emulsionskonzentrate usw.) zur Anwendung kommen können und den vorteilhaften Effekt ergeben. Diese Formulierungen enthalten je nach Typ ein Gemisch aus einem Wirkstoff der allgemeinen Formel I sowie einem Fungizid, einen oder mehrere inerte Träger (z. B. Kaolin, Glimmer, Bentonit, Sepiolit, Diatomeenerde, synthetische Kieselsäure usw.), Netz-, Dispergier- oder Emulgiermittel (z. B. Ligninsulfonate, Dinaphthalmethan-disulfonate, Polyvinylsulfonate, Alkylsuccinate, Natriumsulfit, Alkylbenzolsulfonate, Alkylphenylpolyglykolether usw.), Haftmitter (z. B. Polyvinylalkohole, pflanzliche und tierische Wachse, Albumine, Dextrine, Gummi arabicum, natürliche und synthetische Harze usw.), Lösungsmittel (z. B. DMSO, DMF, HMPT, Triazetin, Propylenglykol usw.), Öle (mineralische und Triglyceride) und bei Bedarf Antiballungsmittel. Speziell für die Herstellung von Spritzpulvern oder Stäuben können Mahlhilfsmittel neben inerten Trägern notwendig sein, wobei dann Substanzen, wie Kreidepulver, Tonerden, natürliche Silikate oder Salze, wie Natriumsulfat, Natriumcarbonat, Natriumphosphate, Natriumthiosulfat und Natriumbicarbonat zur Anwendung kommen.

Beispiel 1-10

Erfindungsgemässe Mittel formuliert als Spritzpulver haben folgende Zusammensetzung :

Mittel I
4 Gew.-% 2-Chlor-6-methyl-4-benzylphenol

50 Gew.-% Carbendazim
40 Gew.-% Kaolin
3 Gew.-% Sulfitablaugepulver
3 Gew.-% ethoxylierter Alkylphenylpolyglykolether

Mittel II
5,0 Gew.-% 2-Chlor-6-methyl-4-benzylphenol
22,5 Gew.-% Thiabendazol
60,5 Gew.-% Calciumcarbonat
6 Gew.-% Natriumligninsulfonat
6 Gew.-% ethoxylierter Alkylphenylpolyglykolether

Mittel III
4 Gew.-% 2-Chlor-6-methyl-4-(4'-isopropylbenzyl)-phenol
50 Gew.-% Carbendazim
6 Gew.-% Propylenglykol
30 Gew.-% synthetische Kieselsäure
4 Gew.-% Sulfitablaugepulver
6 Gew.-% ethoxylierter Alkylphenylpolyglykolether

Mittel IV
5 Gew.-% 2-Chlor-6-methyl-4-(4'-isopropylbenzyl)-phenol
30 Gew.-% Thiabendazol
5 Gew.-% Ethylenglykol
40 Gew.-% synthetische Kieselsäure
12 Gew.-% Dinaphthalmethan-disulfonate
3 Gew.-% Polyvinylacetat
5 Gew.-% N-Oleylvinyltauridnatrium

Mittel V
30 Gew.-% 2-Chlor-6-methyl-4-(4'-isopropylbenzyl)-phenol
20 Gew.-% Methalaxyl
32 Gew.-% synthetische Kieselsäure
3 Gew.-% Natriumdioctylsulfosuccinat
8 Gew.-% hydriertes Natriumsilicoaluminat
4 Gew.-% Natriumligninsulfonat
3 Gew.-% ethoxilierter Alkylphenylpropylglykolether

Mittel VI
30 Gew.-% 2-Chlor-6-ethyl-4-benzylphenol
30 Gew.-% Maneb
8 Gew.-% ausgefälltes Siliziumdioxid
25 Gew.-% Kaolin
3 Gew.-% Natriumlaurylsulfat
4 Gew.-% Natriumligninsulfonat

Mittel VII
40 Gew.-% 2-Chlor-6-methyl-4-(4'-isopropylbenzyl)-phenol
20 Gew.-% Mancozeb
24 Gew.-% Kaolin
3 Gew.-% Natriumdioctylsulfosuccinat
6 Gew.-% hydriertes Natriumsilicoaluminat
4 Gew.-% Natriumligninsulfonat
3 Gew.-% ethoxylierter Alkylphenylpolyglykolether

Mittel VIII
40 Gew.-% 2-Brom-6-methyl-4-benzylphenol
20 Gew.-% Zineb
24 Gew.-% Kaolin
3 Gew.-% Natriumdioctylsulflosuccinat
6 Gew.-% hydriertes Natriumsilicoaluminat
4 Gew.-% Natriumligninsulfonat
3 Gew.-% ethoxylierter Alkylphenylpolyglykolether

Mittel IX
4 Gew.-% 2-Brom-6-ethyl-4-benzylphenol
50 Gew.-% Thiophanat-methyl
40 Gew.-% Kaolin
3 Gew.-% Sulfitablaugepulver
3 Gew.-% ethoxylierter Alkylphenylpolyglykolether

Mittel X
25 Gew.-% 2-Brom-6-ethyl-4-benzylphenol
30 Gew.-% Schwefel
35 Gew.-% Diatomeenerde
5 Gew.-% Sulfitablaugepulver
5 Gew.-% ethoxylierter Alkylphenylpolyglykolether

Beispiele 11 bis 19

Erfindungsgemässe Mittel formuliert als Suspensionen haben die folgenden Zusammensetzungen :

Mittel XI
30 Gew.-% 2-Chlor-6-methyl-4-(4'-isopropylbenzyl)-phenol
3 Gew.-% Carbendazim
19 Gew.-% Ethylenglykol
25 Gew.-% Butanol
3 Gew.-% Metaupon
20 Gew.-% ethoxylierter Alkylphenylpolyglykolether

Mittel XII
30 Gew.-% 2-Brom-6-methyl-4-benzylphenol
15 Gew.-% Captan
34 Gew.-% ethoxylierter Alkylphenylpolyglykolether
10 Gew.-% Propylenglykol
4 Gew.-% Dibutylphthalat
6 Gew.-% Triazetin
1 Gew.-% Antaphron NE 30

Mittel XIII
10 Gew.-% 2-Brom-6-methyl-4-benzylphenol
5 Gew.-% Cu-Stearat
10 Gew.-% Dimethylaminethanol
20 Gew.-% DMSO
20 Gew.-% Methylboxalin
35 Gew.-% ethoxylierter Alkylphenylpolyglykolether

Mittel XIV
5 Gew.-% 2-Brom-6-methyl-4-benzylphenol
5 Gew.-% Schwefel
10 Gew.-% Dimethylaminoethanol
25 Gew.-% DMSO
25 Gew.-% Xylol
30 Gew.-% ethoxylierter Alkylphenylpolyglykolether

Mittel XV
10 Gew.-% 2-Brom-6-methyl-4-benzylphenol
5 Gew.-% Grisaofulvin
25 Gew.-% Dimethylaminoethanol
30 Gew.-% DMSO
30 Gew.-% ethoxylierter Alkylphenylpolyglykolether

Mittel XVI
12 Gew.-% 2-Brom-6-methyl-4-benzylphenol
15 Gew.-% Kupferoxidchlorid
15 Gew.-% synthetische Kieselsäure
6 Gew.-% Propylenglykol
2 Gew.-% Hydroxymethylcellulose
5 Gew.-% ethoxylierter Alkylphenylpolyglykolether
45 Gew.-% Wasser

Mittel XVII
5 Gew.-% 2-Chlor-6-ethyl-4-benzylphenol
5 Gew.-% Schwefel
10 Gew.-% synthetische Kieselsäure
50 Gew.-% Spindelöl
30 Gew.-% ethoxylierter Alkylphenylpolyglykolether

Mittel XVIII
25 Gew.-% 6-Brom-2-methyl-4-benzylphenol
25 Gew.-% Tridemorph
16 Gew.-% Propylenglykol
34 Gew.-% ethoxylierter Alkylphenylpolyglykolether

Mittel XIX
20 Gew.-% 6-Brom-2-methyl-4-benzylphenol
20 Gew.-% Metalaxyl
30 Gew.-% Propylenglykol
10 Gew.-% DMSO
20 Gew.-% ethoxylierter Alkylphenylpolyglykolether

## Beispiel 20

Test an Kartoffelknollen im Labor

Zur Anwendung kommen die erfindungsgemässen Mittel III, Mittel XX, XXI (2-Chlor-6-methyl-4-benzylphenol + Carbendazim im Verhältnis 1 : 50 bzw. 1 : 12,5 gemischt und formuliert entsprechend Mittel III), Mittel II Thiabendazol und Carbendazim.

Diese Formulierungen und die Vergleichsmittel Carbendazim und Thiabendazol werden in einem Labortest gegen Fusarium-Trockenfäule (Fusarium spp.), bakterielle Nassfäule (Erwinia spp.) und Mischfäule (Fusarium spp. + Erwinia spp.) an Kartoffelknollen der Sorte Adretta nach künstlicher Infektion untersucht. Der fungizide Wirkungsgrad der Prüfmittel ist in Tabelle 1 dargestellt. Der fungizide Wirkungsgrad wurde aus dem Befallsgrad ermittelt. Das erfindungsgemässe Mittel III liegt in der fungiziden Wirkung gegen die drei Fäuletypen deutlich über dem fungiziden Wirkungsgrad der Einzelsubstanzen. Besonders ist die ausgezeichnete Wirkung gegen bakterielle Nassfäule und Mischfäule hervorzuheben, die äusserst schwer bekämpfbar sind.

Tabelle 1

Fungizide Wirkung der erfindungsgemässen Mittel II, III, XX und XXI im Vergleich zu 2-Chlor-6-methyl-4-(4'-isopropylbenzyl)-phenol, 2-Chlor-6-methyl-4-benzylphenol, Thiabendazol und Carbendazim gegen Fusarium-Trockenfäule (Fusarium spp.), bakteriele Nassfäule (Erwinia spp.) und Mischfäule (Fusarium spp. + Erwinia spp.) an Kartoffelknollen der Sorte « Adretta » nach künstlicher Infektion unter Labordebingungen.

| Variante | Aufwandmenge (Wirkstoff) pro Tonne | Wirkungsgrad in % Fusarium Trockenfäule | Nassfäule | Mischfäule |
|---|---|---|---|---|
| 2-Chlor-6-methyl-4-(4'-isopropyl-benzylphenol + Carbendazim (Mittel III) | 10g+125 g | 90 | 100 | 100 |
| 2-Chlor-6-methyl-4-benzylphenol + Thiabendazol (Mittel II) | 10g+45 g | – | – | 99 |

Tabelle 1 (Fortsetzung)

| Variante | Aufwandmenge (Wirkstoff) pro Tonne | Wirkungsgrad in % Fusarium Trockenfäule | Nassfäule | Mischfäule |
|---|---|---|---|---|
| 2-Chlor-6-methyl-4-(4'-isopropyl-benzyl)-phenol | 10 g | 30 | 40 | 10 |
| 2-Chlor-6-methyl-4-benzylphenol + Carbendazim (Mittel XX) | 2,5g+125g | 83 | 100 | 95 |
| 2-Chlor-6-methyl-4-benzylphenol + Carbendazim (Mittel XXI) | 10g+125g | 92 | 100 | 98 |
| 2-Chlor-6-methyl-4-benzylphenol | 2,5 g | 28 | - | 7 |
| 2-Chlor-6-methyl-4-benzylphenol | 10 g | 37 | 40 | 10 |
| Carbendazim | 125 g | 70 | 10 | 10 |
| Thiabendazol | 45 g | - | - | 72 |

Beispiel 21

Test an Kartoffelknollen unter Praxisbedingungen (Sorte « Libelle »)

Kartoffelknollen (Sorte « Libelle ») dienen zur Testung der erfindungsgemässen Gemische (Mittel XX und XXI) bei Lagerung unter Praxisbedingungen. Zusätzlich wird ein erfindungsgemässes Gemisch (Mittel XXII) 2-Chlor-6-methyl-4-benzylphenol : Carbendazim 1 : 10 mit den üblichen Formulierungshilfsstoffen formuliert (entsprechend Mittel III) und in die Testung einbezogen. Es wurden 5 kg Proben (5 Wiederholungen in einer Laborbeiztrommel) zusätzlich infiziert, behandlet und praxisüblich gelagert. Als Vergleich dient das Handelspräparat bercema-Demex, das als bakterizide Komponente Chloramphenicol enthält. Die Wirkung der Prüfmittel ist in Tabelle 2 getrennt nach Fusarium-Trockenfäule, bakterieller Nassfäule und Mischfäule dargestellt. Die erfindungsgemässen Mittel sind in der fungiziden Wirkung dem chlorampenicolhaltigen Vergleichspräparat bercema-Demex gleichwertig. Bei einem der erfindungsggemässen Mittel kann sogar eine bessere fungizide Wirkung gegen die Mischfäule beobachtet werden.

(Siehe Tabelle 2 Seite 9 f.)

Tabelle 2

Fungizide Wirkung der erfindungsgemässen Mittel im Vergleich zum Handelspräparat bercema-Demex gegen Fusarium-Trockenfäule (Fusarium spp.), bakterielle Nassfäule (Erwinia spp.) und Mischfäule (Fusarium spp. + Erwinia spp.) an Kartoffelknollen der Sorte « Libelle » nach zusätzlicher Infektion unter Praxisbedingungen.

| Variante | Aufwand-menge pro Tonne | Fäulebefall (in %) Fusarium Trocken-fäule | Nass-fäule | Misch-fäule | Fäulen insgesamt |
|---|---|---|---|---|---|
| Kontrolle ungebeizt | | 10,3 | 0 | 5,7 | 16,0 |
| 2-Chlor-6-methyl-4-benzylphenol + Carbendazim (Mittel XX) | 2,5g+125g | 6,5 | 0 | 0,8 | 7,3 |
| 2-Chlor-6-methyl-4-benzylphenol + Carbendazim (Mittel XXI) | 10g+125 g | 7,1 | 0 | 0,9 | 8,0 |
| 2-Chlor-6-methyl-4-benzylphenol + Carbendazim (Mittel XXII) | 24g+125g | 6,0 | 0 | 0,4 | 6,4 |
| Carbendazim + Chloramphenicol (bercema-Demex) | 115g+2,6g | 6,4 | 0 | 0,8 | 7,2 |

Beispiel 22

Prüfung dererfindungsgemässen Gemische gegen Getreidemehltau (Erysiphe graminis DC.)

Die erfindungsgemässen Gemische (Mittel XI, XIII, XV) werden für die Versuche benutzt. Zur Versuchsdurchführung werden Weizenpflanzen im Einblattstadium mit Erysiphe graminis DC f. sp. tritici Marchal infiziert und nach 24 h mit den ausgewählten Mitteln tropfnass behandelt. Der fungizide Wirkungsgrad wurde aus den Boniturnoten über den Befallgrad ermittelt.

Die erfindungsgemässen Gemische zeigen eine sehr gute fungizide Wirkung gegem Getreidemehltau unter Labordebingungen.

Tabelle 3

Fungizide Wirkung der erfindungsgemässen Mittel XI, XIII und XV gegen getreidemehltau (Erysiphe graminis DC f. sp. tritici Marchal).

| Variante | Wirkstoffkonzentration (in ppm) | Wirkungsgrad (in %) |
|---|---|---|
| 2-Chlor-6-methyl-4-(4'-isopropyl-benzyl)-phenol + Carbendazim (Mittel XI) | 750 | 100 |
| 2-Brom-6-methyl-4-benzylphenol + Cu-stearat (Mittel XIII) | 300 + 150 | 95 |
| 2-Brom-6-methyl-4-benzylphenol + Griseofulvin (Mittel XV) | 300 +150 | 100 |

Beispiel 23

Prüfung der erfindungsgemässen Gemische gegen Botrytis spp. an Tulpen

Mit den erfindungsgemässen gemischen (Mittel XI und XII) werden mit Botrytis spp. befallene Tulpenzwiebeln durch Tauchen in wässriger Brühe behandelt. Diese Tulpenzwiebeln wurden im Herbst ausgepflanzt und im folgenden Frühjahr auf Krankheitssymptome, die von Botrytis spp. verursacht werden, kontrolliert. Die Ergebnisse dieser Untersuchungen sind in Tabelle 4 dargestellt. Es wurde gefunden, dass die erfindungsgemässen Gemische einen ausgezeichneten Bekämpfungserfolg ergaben.

Tabelle 4

Fungizide Wirkung der erfindungsgemässen Gemische gegen Botrytis spp. an Tulpenzwiebeln

| Variante | Anwendungskonzentration % | Wirkungsgrad % |
|---|---|---|
| 2-Chlor-6-methyl-4-(4'-isopropylbenzyl)-phenol + Carbendazim (Mittel XI) | 0,15 + 0,05 | 98 |
| 2-Brom-6-methyl-4-benzylphenol + Captan (Mittel XII) | 1,00 + 0,50 | 92 |

Beispiel 24

Testung der erfindungsgemässen Gemische (Mittel VII, VIII und XIV) gegen Phytophthora infestans

Tomatenblätter werden mit den erfindungsgemässen Gemischen tropfnass behandelt und anschliessend mit Phytophthora infestans infiziert. Die fungizide Wirkung der Prüfmittel ist in Tabelle 5 dargestellt. Der fungizide Wirkungsgrad wurde nach Auszählung der Infektionsstellen über den Befallsgrad errechnet. Wie aus den Versuchsergebnissen zu ersehen ist, besitzen die erfindungsgemässen Gemische eine ausgezeichnete fungizide Wirksamkeit. Es ist zu erwarten, dass bei der erfindungsgemässen Mischung mit Metalaxyl aufgrund der Kombination mit einer antimikrobiellen Verbindung der allgemeinen Formel I die Gefahr der Resistenzbildung gegen den Wirkstoff Metalaxyl herabgesetzt bzw. vermieden wird.

Tabelle 5

Fungizide Wirkung der erfindungsgemässen Gemische gegen Phytophthora infestans an Tomatenblättern

| Variante | Wirkstoffkonzentration (ppm) | Wirkungsgrad (%) |
|---|---|---|
| 2-Chlor-6-methyl-4-(4'-isopropylbenzyl)-phenol + Mancozeb (Mittel VII) | 150 | 92 |
| 2-Brom-6-methyl-4-benzylphenol + Zineb (Mittel VIII) | 150 | 80 |
| 2-Brom-6-methyl-4-benzylphenol + Metalaxyl (Mittel XIV) | 150 | 93 |

Beispiel 25

Test gegen Rindenkrankheitserreger des Obstes in der Petrischale

Ein erfindungsgemässes Gemisch wird hergestellt, indem 2-Chlor-6-Methyl-4-benzylphenol zu dem Benzimidazolfungizid Carbendazim im Verhältnis 50 : 1 gemischt und mit den üblichen Formulierungshilfsstofen formuliert werden. Das erfindungsgemässe Gemisch bzw. 2-Chlor-6-Methyl-4-benzylphenol oder Carbendazim wurde Nähragar für Pilze zugesetzt und in Petrischalen übertragen.

Als Testergebnisse werden verschiedene Erreger von Rindenkrankheiten des Obstes (Nectria spp. Pezicula spp., Gloeosporium spp.) angeimpft. Die Auswertung erfolgte über die Messung des Myzelwachstums und wird durch den fungiziden Wirkungsgrad ausgedrückt. Die Ergebnisse der Untersuchungen sind in der Tabelle 6 dargestellt. Das erfindungsgemässe Mittel liegt in der fungiziden Wirkung gegen die Rindenkrankheitserreger deutlich über dem fungiziden Wirkungsgrad der Einzelsubstanzen.

Tabelle 6

Fungizide Wirkung des erfindungsgemässen Mittels im Vergleich zu 2-Chlor-6-methyl-4-benzylphenol und Carbendazim gegen Rindenkrankeitserreger des Obstes im Petrischalentest

| Erreger | Variante | Anwendungskonzentration bzw. Wirkstoff in ppm | Wirkungsgrad (%) |
|---|---|---|---|
| Nectria spp. | 2-Chlor-6-methyl-4-benzylphenol + Carbendazim | 300 | 100 |
| | 2-Chlor-6-Methyl-4-benzylphenol | 300 | 30 |
| | Carbendazim | 1 | 60 |
| Pezicula spp. | 2-Chlor-6-methyl-4-benzylphenol + Carbendazim | 300 | 100 |
| | 2-Chlor-6-methyl-4-benzylphenol | 300 | 30 |
| | Carbendazim | 1 | 45 |
| Gloeosporium spp. | 2-Chlor-6-methyl-4-benzylphenol + Carbendazim | 300 | 100 |
| | 2-Chlor-6-methyl-4-benzylphenol | 300 | 25 |
| | Carbendazim | 1 | 40 |

Beispiel 26

Beizung gegen Weizensteinbrand (Tilletia spp.)

Für diese Untersuchungen werden zwei erfindungsgemässe Gemische mit dem Mischungsverhältnis 2-Chlor-6-methyl-4-benzylphenol zu Carbendazim von 10 : 1 und 5 : 1 mit den üblichen Formulierungshilfsstoffen hergestellt und nach der Gassner-Methode geprüft. Die fungizide Wirkung der Prüfmittel wird durch Beizung künstlich mit Tilletia-Sporen kontaminierten Weizensaatgutes (Sorte « Alcedo ») und Inkubation in geschlämmtem Boden ermittels. Als Bewertungskriterium gilt die Sporidienbildung. Die

Ergebnisse der Testung der erfindungsgemässen Gemische im Vergleich zu einem Handelspräparat (Falisan-Universal-Trockenbeize 69) sind in Tabelle 7 dargestellt. Der antimikrobielle Wirkstoff hemmt die Sporidienbildung gut. Er wird aber in seiner Wirkung von den erfindungsgemässen Gemische übertroffen. Die Wirkung des Vergleichspräparates wird nur von einem erfindungsgemässen Mittel erreicht.

Tabelle 7

Ergebnisse der Beizung gegen Weizensteinbrand (Tilletia spp.)

| Variante | Aufwandmenge (Wirkstoff) pro 100 kg Saatgut | Hemmung der Sporidienbildung Kennzahl |
|---|---|---|
| unbehandelte Kontrolle | - | 1 |
| 2-Chlor-6-methyl-4-benzylphenol + Carbendazim | 20 g + 2 g | 3 |
| 2-Chlor-6-methyl-4-benzylphenol + Carbendazim | 10 g + 2 g | 2 |
| 2-Chlor-6-methyl-4-benzylphenol | 20 g | 2 |
| 2-Chlor-6-methyl-4-benzylphenol | 10 g | 2 |
| Phenylquecksilberazetat (Falisan-Universal-Trockenbeize 69) | 4,88 g | 3 |

Legende: Kennzahl 0 = Sporidienbildung über 60 %
1 = Sporidienbildung 15 bis 60 %
2 = Sporidienbildung 3 bis 15 %
3 = Sporidienbildung 0 bis 3 %

**Patentansprüche**

1. Mittel zur Bekämpfung phytopathogener Pilze und Bakterien, dadurch gekennzeichnet, daß es ein synergistisch wirkendes Gemisch ist aus antimikrobiell wirksamen Derivaten eines Phenols der allgemeinen Formel I

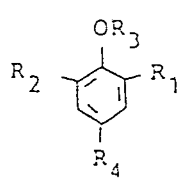

(I)

ist, worin $R_4$ die Gruppierung

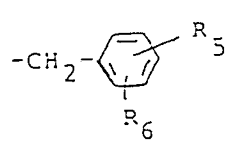

darstellt, und $R_1$, $R_2$, $R_5$ und $R_6$ Chlor, Brom oder Alkylgruppen mit bis zu 5 C-Atomen, wobei $R_5$ und $R_6$ zusätzlich auch Wasserstoff, $R_3$ Wasserstoff, Natrium, Kalium, Magnesium, Calcium, Barium, Zinn, Zink, Kupfer, Ammonium oder substituiertes Ammonium sowie Wismut bedeuten, und $R_1$, $R_2$ und $R_4$

austauschbar sowohl in ortho- als auch in para-Stellung angeordnet sein können, und Fungiziden aus der gruppe

Schwefel,
Kupferoxidchlorid,
Pentachlornitrobenzol,
Dithiocarbamate, (Zineb, Maneb, Mancozeb),
Fentinacetat,
Captan,
Captafol,
Propamocarb,
Oxathiine, (Carboxin, Oxycarboxin),
Benzimidazole (Benomyl, Carbendazin, Thiophanat-Methyl, Thiabendazol, Fuberidazol),
Pyrimidine (Ethirimol, Dimethirimol, Nuarimol, Fenamirol),
Morpholine (Tridemorph, Dodemorph, Aldimorph, Fenpropemorph),
Triforine,
Pyrazophos,
Triadimofon,
Triademenol,
Chloraniformethan,
Dichlobentrazol und
Metalaxyl.

2. Mittel nach Anspruch 1, dadurch gekennzeichnet, daß das Mischungsverhältnis zwischen den antimikrobiell wirksamen Derivaten des Phenols der allgemeinen Formel I und dem Fungizid 100 : 1 bis 1 : 100 und vorzugsweise bei der Anwendung an der Kartoffelknolle 1 : 50 bis 1 : 5 beträgt.

3. Mittel nach Anspruch 1, dadurch gekennzeichnet, daß es vorrangig Benzimidazolfungizide oder Dithiocarbamate und vorzugsweise zum Einsatz an der Kartoffelknolle Carbendazim und Thiabendazol als Fungizid enthält.

4. Mittel nach Anspruch 1, dadurch gekennzeichnet, daß es zusätzlich Insektizide, Bakterizide, Virizide, Herbizide, Sikkanten, Mineralstoffe, Spurenelemente sowie Mittel zur Steuerung biologischer Prozesse in geeigneten Konzentrationen einzeln oder in Kombinationen enthält.

5. Verfahren zur Bekämpfung phytopathogener Pilze und Bakterien, dadurch gekennzeichnet, daß man ein Mittel nach Anspruch 1 in den Lebensraum der Planzen einträgt.

6. Verwendung des Mittels nach Anspruch 1 zur Bekämpfung phytopathogener Pilze und Bakterien.

**Claims**

1. Agent for combatting phytopathogenic fungi and bacteria, characterised in that it is a synergistic mixture of an antimicrobial derivative of a phenol of the general formula I

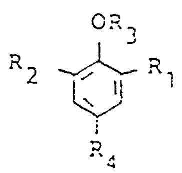

(I)

wherein $R_4$ represents the group

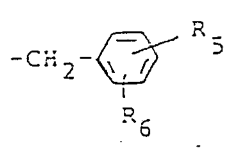

and $R_1$, $R_2$, $R_5$ and $R_6$ indicate a chlorine or bromine atom or alkyl group with up to 5 carbon atoms, whereby $R_5$ and $R_6$ can additionally represent a hydrogen atom, $R_3$ a hydrogen atom or a sodium, potassium, magnesium, calcium, barium, tin, zinc or copper atom or ammonium or substituted ammonium or a bismuth atom and $R_1$, $R_2$ and $R_4$ are arranged interchangeably in ortho and also para positon, and fungicides from the group

Sulphur,
Copperoxidechloride,
Pentachloronitrobenzene,
Dithiocarbamate (Zineb, Maneb, Mancozeb),
Fentinacetate,

Captan,
Captafol,
Propamocarb,
Oxathiine (Carboxin, Oxycarboxin),
Benzimidazole (Benomyl, Carbendazin, Thiophenat-methyl, Thiabendazol, Fuberidazol),
Pyrimidine (Ethirimol, Dimethirimol, Nuarimol, Fenamirol),
Morpholine (Tridemorph, Dodemorph, Aldimorph, Fenpropemorph),
Triforine,
Pyrazophos,
Triadimofor,
Triademenol,
Chloraniformethan,
Dichlorobentrazol and
Metalaxyl.

2. Agent according to claim 1 characterised in that the mixing ratio of the antimicrobial derivative of the phenols of the general formula I and the fungicide is from 100 : 1 to 1 : 100 and preferably on application to potato tubers from 1 : 50 to 1 : 5.

3. Agent according to claim 1 characterised in that it contains predominantly Benzimazole fungicides or dithiocarbamate and preferably on application to potato tubers Carbendazin and Thiabendazol.

4. Agent according to claim 1 characterised in that it contains additionally insecticides, bactericides, viricides, herbicides, drying agents, minerals, trace elements as also agents to regulate biological processes in suitable concentrations alone or in combinations.

5. Process for combatting phytopathogenic fungi and bacteria characterised in that an agent according to claim 1 is introduced into the biosphere of the plants.

6. Use of the agent according to claim 1 for combatting phytopathogenic fungi and bacteria.

**Revendications**

1. Agent pour combattre les champignons et bactéries phytopathogènes, caractérisé par le fait que c'est un mélange agissant de manière synergique constitué de dérivés actifs antimicrobiens d'un phénol de formule générale I

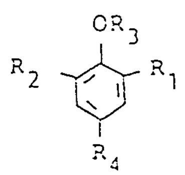

(I)

où $R_4$ représente le groupe

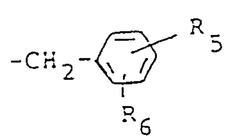

et $R_1$, $R_2$, $R_5$ et $R_6$ représentent le chlore, le brome ou des groupes alkyle ayant jusqu'à 5 atomes de carbone, $R_5$ et $R_6$ représentant en plus aussi l'hydrogène, $R_3$ représente l'hydrogène, le sodium, le potassium, le magnésium, le calcium, le baryum, l'étain, le zinc, le cuivre, l'ammonium ou l'ammonium substitué ainsi que le bismuth, et $R_1$, $R_2$ et $R_4$ peuvent être disposés de manière interchangeable aussi bien en position ortho qu'en position para, et de fongicides faisant partie du groupe comprenant :
le soufre,
l'oxychlorure de cuivre,
le pentachloronitrobenzène,
les dithiocarbamates (Zinebe, Manebe, Mancozeb),
le Fentinacétate
le Captane,
le Captafol,
le Propamocarb,
les oxathiines (Carboxine, Oxycarboxine),
les benzimidazoles (Benomyl, Carbandazime, Thiophanateméthyl, Thiabendazole, Fuberidazole)
les pyrimidines (Ethinimol, Diméthirimol, Nuarimol, Fenamirol),

les morpholines (Tridemorph, Dodémorph, Aldimorph, Fenpropemorph),
le Triforine,
le Pyrazophos,
le Triadifon,
le Triadéménol,
le Chloraniforméthane,
le Dichlorobentrazol et
le Métaxalyl.

2. Agent selon la revendication 1, caractérisé par le fait que le rapport du mélange entre les dérivés actifs antimicrobiens du phénol de formule générale I et le fongicide s'élève entre 100 : 1 et 1 : 100, et, de préférence entre 1 : 50 et 1 : 50 lors de son utilisation pour les tubercules de pommes de terre.

3. Agent selon la revendication 1, caractérisé par le fait qu'il contient de préférence des fongicides benzimidazoles ou des dithiocarbamates, et de préférence du Carbendazime et du Thiabendazol comme fongicide lors de son utilisation sur les tubercules de pommes de terre.

4. Agent selon la revendication 1, caractérisé par le fait qu'il contient en plus, seuls ou en combinaisons, des insecticides, des bactéricides, des virulicides, des herbicides, des agents de dessiccation, des substances minérales, des oligo-éléments ainsi que des agents pour commander les processus biologiques, en des concentrations appropriées.

5. Procédé pour combattre les champignons et bactéries phytopathogènes, caractérisé par le fait que l'on introduit dans l'espace vital des plantes un agent selon la revendication 1.

6. Utilisation de l'agent selon la revendication 1 pour combattre les champignons et bactéries phytopathogènes.